# EUROPEAN PATENT SPECIFICATION

(11) **EP 1 843 541 B1**
(45) Date of publication and mention of the grant of the patent: **24.02.2010**
(21) Application number: 06290572.4
(22) Date of filing: 03.04.2006
(51) Int. Cl.: H04L 29/06, H04L 12/28

(54) **A method of securing communication between an access network and a core network**
Verfahren zur Sicherung der Kommunikation zwischen einem Zugangsnetz und einem Vermittlungsnetz
Procédé de sécurisation des communications entre un réseau d'accès et un réseau central

(43) Date of publication of application: 10.10.2007
(73) Proprietor: Alcatel Lucent, 75008 Paris (FR)
(72) Inventor: De Juan Huarte, Frederico, 75014 Paris (FR); Conte, Alberto, 75014 Paris (FR)
(74) Representative: Schmidt, Werner Karl

(56) References cited:
- WO-A-2005/020619
- US-A1- 2005 114 492
- DROMS R, SCHNIZLEIN: "RADIUS Attributes Sub-option for the DHCP Relay Agent Information Option; draft-ietf-dhc-agentopt-radius-05.txt;" INTERNET DRAFT, INTERNET ENGINEERING TASK FORCE, 1 April 2004 (2004-04-01), XP015016883
- AGIS E ET AL: "Global, interoperable broadband wireless networks: extending WiMAX technology to mobility" INTEL TECHNOLOGY JOURNAL INTEL CORP USA, vol. 8, no. 3, 20 August 2004 (2004-08-20), pages 173-186, XP002399864 ISSN: 1535-864X
- NAKHJIRI M, VENKITARAMAN N: "EAP based Proxy Mobile IP key bootstrapping: A WiMAX applicability example; draft-nakhjiri-pmip-key-02.txt" INTERNET-DRAFT, INTERNET ENGINEERING TASK FORCE (IETF), February 2006 (2006-02), XP015044436

## Description

### Field of the invention

The invention relates to a method of securing communication between an access network and a core network, to a core network, to an access network, to components of the access network and the core network and to a computer program product for performing operations to secure communication between the access network and the core network.

### Background and related art

A communication network is usually divided into an access network and into a core network. An access network is a network that connects users, for example subscribers of a telecommunication service provider, to the actual service provider, whose functionality is comprised in the core network. For connection to the access network the user typically employs a user end device, such as a mobile phone, a mobile terminal, a PDA, a computer or any other device which is connectable to a communication network. The user end device can be regarded as a node connected to and served by the communication network.

The internet protocol (IP) is nowadays the standard protocol that is employed within communication networks. However this protocol and all the protocols associated with it, for example DHCP (dynamic host configuration protocol), MIP (mobile IP), or IGMP (internet gateway multicast protocol) present two major inconvenient features for deployment in public communication networks. One inconvenient feature is that the intelligence is in the end points, in the terminal and in the core network, and the other inconvenient feature is that the control plain shares the same data path as the data plain.

The aspect that the intelligence is in the end points is awkward for a public operator due to the cost of provisioning, maintaining, upgrading and guaranteeing security against a wide base of subscribers. In the core network, the core user session and mobility management are controlled and in the access network, the traffic aggregation takes place. It is a common decomposition for any type of function to locate a server in the core network and an agent in the access network. For instance, in DHCP, there is a DHCP server in the core network and a DHCP relay in the access network, for IGMP, there is an IGMP server in the core network and an IGMP proxy in the access network, and for MIP, there is a home agent in the core network and a foreign agent in the access network.

The other aspect mentioned is that the control plain shares the same data path as the data plain. This is the source of multiple security and privacy concerns because the control plain network elements are accessible to the simplest user traffic. Therefore, a huge effort is spent in designing security models and frameworks that allow to protect the network infrastructure. However, the solutions available to date differ largely. For example there are IGMP deployments with no security mechanisms proposed. For the context of DHCP the document RFC3118 which can be obtained from www.ietf.org has been proposed but it has not made it to the commercial market yet. A fully fledged security model is in place for MIP but to the cost of heavy dependency on the terminal.

The document of R.Droms, J. Schnizlein: 'Radius attributes sub-option for the DHCP relay agent information option', internet draft, internet engineering taskforce, 1, April 2004, XP015016883 discloses a network access server which may choose to authenticate the identity of a device before granting that device access to the network. The IEEE 802.1X protocol is an example of a mechanism for providing authenticated layer 2 network access. A network element using radius as an authentication authority will receive attributes from a radius server that may be used by a DHCP server in the selection of configuration parameters to be delivered to the device through its DHCP client. The radius attributes sub-option enables a network element to pass along attributes for the user of a device received during radius authentication to a DHCP server.

US 2005/0114492 discloses methods and apparatuses for a network element having DHCP proxy functionality. According to one embodiment, an exemplary method includes receiving, at a network element, a request for an IP address from a subscriber, in response to the request, on behalf of the subscriber, communication with one or more IP address providers over a network to process the request, and responding to the subscriber with respect to the request as if the network element is an IP address provider, on behalf of the one or more IP address providers.

The document entitled "EAP based Proxy Mobile IP key bootstrapping: A WAX applicability example" by M. Nakhjiri and N. Venkitaraman published by the Internet Engineering Task Force (IETF) provides an illustration on how the EAP keying framework may be used for bootstrapping keys between two agents performing a network service such as Proxy Mobile IP function. The solution described by the authors is aligned as closely as possible to the guidelines provided by the EAP Keying framework and is fitted to the constraints of the existing SDO scenarios and may not fully fit a future generic application keying solution defined by HOAKEY.

It is aimed for an improved method of securing communication between an access network and a core network, an improved core network, an improved access network, an improved agent, an improved communication network component as well as improved computer program products for performing operations to secure communication between an access network and a core network.

### Summary of the invention

In accordance with an embodiment of the invention, there is provided a method of securing communication between an access network and a core network, wherein the access network and the core network are comprised in a communication network, wherein the access network comprises an agent, wherein the core network comprises a server and a trust server, and wherein the method comprises the step of receiving a request from the agent at the core network, wherein the request relates to a node, wherein the node is served by the agent, wherein the request requests information about the node from the server. The method further comprises the step of requesting confirmation from the trust server if the node has been previously authenticated against the communication network and the step of sending the information requested by the agent from the server to the agent if the node has been previously authenticated against the communication network. The method further comprises the step of denying sending the information if the node has not been previously authenticated against the communication network.

The information which is comprised in the request can also refer to a demand by which the agent asks the server if the agent can authorize the node to perform an operation. The demand is granted if confirmation is given by the server. Thus the information sent by the server relates to an approval of the demand. If the information is not sent, then the demand is not approved.

The server who is requested to provide the agent with information about the node only partially trusts the agent, since the server requests from the trust server if the node has been previously authenticated against the network. Only if this is the case, meaning that the node has been previously authenticated, it forwards the information to the agent. Since the access network relates typically to a specific region or to a specific location, the server validates before sending the information to the access network that the node is indeed served in that location.

The method in accordance with the invention is particularly advantageous as there is no dependency on the node, which can relate to a terminal, anymore. Once the node has been authenticated against the communication network, the communication is secured between the access network and the core network by requesting the trust server if that node has been previously authenticated. The terminal itself is not needed anymore for ensuring secure communication between the access network and the core network. The method in accordance with the invention is furthermore advantageous as it provides a much simpler model to provide security in the communication between the access network and the core network that relates to a node served by the access network, when the client functionality is proxied in the access network.

In accordance with an embodiment of the invention, the method further comprises the steps of authenticating the node against the communication network by the trust server and assigning the agent to the node.

In accordance with an embodiment of the invention, the method further comprises forwarding the confirmation from the trust server to the server. The node is initially authenticated against the communication network by use of the EAP protocol (extensible authentication protocol). In this context the trust server is an EAP server. The method in accordance with the invention is particularly advantageous because the authentication solution which is employed to authenticate initially the node against the communication network by use of the EAP protocol is used as well for ensuring the communication between the access network and the core network since the EAP server is requested if the node has been previously authenticated against the communication network. Hence the server does not need to maintain multiple security associations per user or per node with associated shared secrets, lifetimes, or sequence numbers since only the initial authentication carried out by the EAP server is validated.

In accordance with an embodiment of the invention, the method further comprises the step of receiving the request from the agent, wherein the request comprises an authenticator identifier, wherein the authenticator identifier relates to an authenticator of the access network. The method in accordance with the invention furthermore comprises the step of requesting confirmation from the trust server that the authenticator has been employed for a previous authentication of the node.

In accordance with an embodiment of the invention, the method further comprises the step of comparing the authenticator identifier with a second authenticator identifier stored in the trust server, wherein the second authenticator identifier relates to the authenticator which has authenticated the node previously. The method further comprises the step of confirming that the authenticator is indeed the authenticator that has previously authenticated the node if the authenticator identifier equals the second authenticator identifier, the step of sending the information requested by the agent from the server to the agent if the authenticator identifier equals the second authenticator identifier, and the step of denying sending the information if said authenticator identifier does not equal the second authenticator identifier. The authenticator is the agent in the access network that relates to the authentication server. It is basically double checked if the node is indeed the originally authenticated node first by requesting confirmation from the trust server if the agent is serving the node and second by requesting confirmation if the authenticator is still serving the node. The access network and the authenticator typically relate to a specific location area. A location area in the context of mobile communication networks refers to a group of adjacent radio cells. A group of adjacent radio cells can be understood as a plurality of adjacent cells of a mobile communication network. A cell of a mobile communication network is for example given by the coverage of a base station which is the area that is covered or served by a base station.

The method in accordance with the invention is furthermore particularly advantageous as by checking that the serving authenticator of the node has not changed, it is furthermore ensured that the location area of the node has remained the same.

In accordance with an embodiment of the invention, the communication network is a mobile communication network. A mobile communication network can be for example be a wireless telecommunications network.

In accordance with an embodiment of the invention, the agent is a foreign agent of a mobile internet protocol (MIP) network. A MIP network is a mobile communication network which employs the MIP protocol.

In accordance with an embodiment of the invention, the server is a home agent of the mobile communication protocol (MIP) network.

In accordance with an embodiment of the invention, the trust server is an extensible authentication protocol (EAP) server.

In accordance with an embodiment of the invention, the mobile communication network is employing the IEEE802.16 (WIMAX) standard for communication with the mobile station.

In accordance with an embodiment of the invention, the mobile communication network is employing the IEEE802.11X (WLAN) standard for communication with the mobile station.

In accordance with an embodiment of the invention, the node refers to an end user device such as a cell phone, a portable computer, a computer, a PDA, or any other portable device having a network connection.

In accordance with an embodiment of the invention, the agent is a DHCP (dynamic host configuration protocol) relay or proxy.

In accordance with an embodiment of the invention, the server is a DHCP server.

In accordance with an embodiment of the invention, the agent is an IGMP proxy and the server is an IGMP server.

In another aspect the invention relates to a method of securing communication between an access network and a core network, wherein the access network and the core network are comprised in a communication network, wherein the access network comprises an agent and an authenticator, wherein the core network comprises a server and a trust server, wherein the method comprises the step of sending a request from the agent to the server, wherein the request relates to a node that has been authenticated against the communication network, wherein the node is served by the agent, wherein the request requests information about the node from the server, wherein the request further comprises an authenticator identifier, wherein the authenticator identifier relates to the authenticator and the step of receiving the information from the server.

The method in accordance with the invention is particularly advantageous as by the request sent to the server by the agent, the authenticator identifier of the authenticator of the access network is included. The authenticator identifier can be employed to validate the location from which the message is sent.

In another aspect the invention relates to a core network that can be coupled to an access network, wherein the access network comprises an agent, wherein the core network comprises a server and a trust server, wherein the core network further comprises means for receiving a request from the agent, wherein the request relates to a node, wherein the node is served by the agent, wherein the request requests information about the node from the server. The core network further comprises means for requesting confirmation from the trust server that the node has been previously authenticated, means for sending the information requested by the agent from the server to the agent if the node has been previously authenticated and means for denying sending the information if the node has not been previously authenticated.

In accordance with an embodiment of the invention, the core network further comprises means for authenticating the node against the communication network by the trust server and means for assigning the agent to the node.

In accordance with another embodiment of the invention, the communication network further comprises means for forwarding the confirmation from the trust server to the server.

In accordance with an embodiment of the invention, the core network further comprises means for receiving the request from the agent, wherein the request comprises an authenticator identifier, wherein the authenticator identifier relates to an authenticator of the access network and means for requesting confirmation from the trust server that the authenticator has been employed for a previous authentication of the node.

In accordance with an embodiment of the invention, the core network further comprises means for comparing the authenticator identifier with a second authenticator identifier stored in the trust server, wherein the second authenticator identifier relates to the authenticator which has authenticated the node previously. The core network further comprises means for confirming that the authenticator is indeed the authenticator that has authenticated the node previously if the authenticator identifier equals the second authenticator identifier. The core network further comprises means for sending from the server to the agent the information requested by the agent if the authenticator identifier equals the second authenticator identifier and means for denying sending the information if the authenticator identifier does not equal the second authenticator identifier.

In accordance with an embodiment of the invention, the node authenticated against the core network and the access network is a mobile node relating to a mobile station or to an end user device in general.

In accordance with an embodiment of the invention, the core network and the access network are comprised in a communication network. The communication network can for example be a mobile communication network.

In accordance with an embodiment of the invention, the core network, the access network and the mobile station employ the IEEE802.16 (WIMAX) standard for communication. Alternatively they employ the IEEE802.11 (WLAN) standard.

In another aspect the invention relates to an access network, said access network comprising an agent and an authenticator, said access network being connectable to a core network, said core network comprising a server and a trust server, and said access network further comprises means for sending a request to the server, wherein the request relates to a node, wherein the node is served by the agent, wherein the request requests information about the node from the server, wherein the request further comprises an authenticator identifier, wherein the authenticator identifier relates to the authenticator and means for receiving the information from the server.

In another aspect the invention relates to an agent, wherein the agent is comprised in an access network of a communication network, wherein the communication network further comprises a core network, wherein the access network comprises an authenticator, wherein the core network comprises a server and a trust server, and wherein the agent further comprises means for sending a request to the server, wherein the request relates to a node authenticated against the communication network, wherein the node is served by the agent, wherein the request requests information about the node from the server, wherein the request further comprises an authenticator identifier, wherein the authenticator identifier relates to the authenticator. The agent further comprises means for receiving the information from the server.

In another aspect the invention relates to a communication network component, wherein the communication network component is comprised in a core network of a communication network, wherein the core network further comprises a server and a trust server, wherein the communication network further comprises an access network, wherein the access network comprises an agent, and wherein the communication network component comprises means for receiving a request from the agent, wherein the request relates to a node, wherein the node is served by the agent, wherein the request requests information about the node from the server and means for requesting confirmation from the trust server that the node has been previously authenticated against the communication network. The communication network component further comprises means for sending the information requested by the agent from the server to the agent if the node has been previously authenticated against the communication network and means for denying sending said node if the node has not been previously authenticated against the communication network.

In another aspect the invention relates to a computer program product comprising computer executable instructions for securing communication between an access network and a core network, wherein the access network and the core network is comprised in a communication network, wherein the access network comprises an agent, wherein the core network comprises a server and a trust server, and wherein the instructions are adapted to perform the steps of receiving a request from the agent of the core network, wherein the request relates to a node, wherein the node is served by the agent, wherein the request requests information about the node from the server and of requesting confirmation from the trust server that the node has been previously authenticated against the communication network. The instructions further are adapted to perform the steps of sending the information requested by the agent from the server to the agent if the node has been previously authenticated against the communication network and of denying sending the information if the node has not been previously authenticated against the communication network.

In another aspect the invention relates to a computer program product comprising computer executable instructions for securing communication between an access network and a core network, wherein the access network and the core network is comprised in a communication network, wherein the access network comprises an agent, wherein the core network comprises a server and a trust server, wherein instructions are adapted to perform the steps of sending a request to the server, wherein the request relates to a node authenticated before against the communication network, wherein the node is served by the agent, wherein the request requests information about the node from the server, wherein the request further comprises an authenticator identifier, wherein the authenticator identifier relates to the authenticator and of receiving the information from the server.

### Brief description of the drawings

In the following preferred embodiments of the invention will be described in greater detail by way of example only making reference to the drawings in which:
- Figure 1: is a block diagram of a mobile communication network and a mobile station,
- Figure 2: is a flow diagram depicting the basic steps performed by the method in accordance with the invention.

### Detailed description

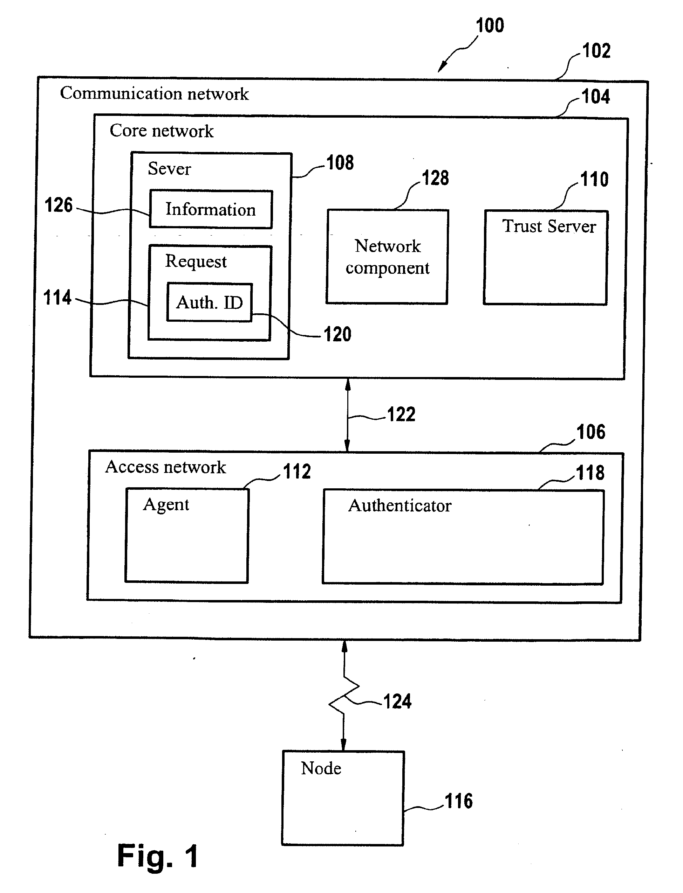

Fig. 1 shows a block diagram 100 illustrating schematically a communication network 102 that is connected to a node 116. The communication network 102 comprises a core network 104 and an access network 106. The core network 104 comprises a server 108, a network component 128, and a trust server 110. The access network 106 comprises an agent 112 and an authenticator 118. The access network and the core network are connected by the communication link 122. The access network is connected to the node 116 via the communication link 124.

The communication link 124 is typically a wireless communication link between the node 116 and a base station (not shown) of a communication network and a wired link between the base station and the access network 106. The communication link 122 is for example a secured wired communication link between the access network 106 and the core network 104.

In operation, the server receives a request 114 from the agent. The request relates to the node 116 which is served by the agent 112. The request 114 requests information 126 about the node from the server 108. After reception of the request 114, the server requests confirmation from the trust server 110 if the node 116 has been previously authenticated against the communication network 102. If the node 116 has been authenticated by the communication network 102, then the server sends the information 126 requested by the agent to the agent 112. If the node 116 has not been authenticated by the communication network 102, then the information 126 is not sent by the server 108 to the agent 112.

The node 116 is initially authenticated against the communication network 102 via the authenticator 118 by the trust server 110. The initial authentication process that takes place between the node 116, the authenticator 118, and the trust server 110 employs for example the EAP protocol. After the initial authentication has taken place, the node 116 is known to the trust server 110. Furthermore, the trust server 110 'knows' that the authenticator 118 and the agent 112 have been assigned to the node 116. Thus, the server 108 can always confirm that the node 116 has been authenticated before by requesting confirmation from the trust server 110.

The authenticator 118 has been assigned to the node 116 in the initial authentication process. The authenticator 118 is identifiable by an authenticator identifier 120. The agent 112 can add the authenticator identifier 120 to the request 114 before sending the request to the server 108. The trust server 110 knows that the authenticator 118 has been initially assigned during the initial authentication to the node 116 and the authenticator identifier 120 of the authenticator 118 can for example be stored on the trust server 110. After reception of the request 114 the server 118 can request the trust server 110 if the authenticator 118 has indeed been employed for a previous authentication of the node 116 by for example comparing the authentication identifier 120 with the stored authentication identifier. If both authenticator identifiers, the authenticator identifier of the request 114 and the authenticator identifier stored in the trust server match, then the information 126 requested by the agent 112 is sent to the agent whereas otherwise the information is not sent to the agent 112.

In the preceding description of figure 1, the functionality for performing a method in accordance with the invention has been integrated into the server 108. Alternatively the functionality could be integrated into the separate network component 128 which would then be placed between the agent 112 and the server 108 and which would serve to exchange the information 126 between the server 108 and the agent 112 if a request sent by the network component 128 to the trust server 110 would confirm that the node 116 for which the information 126 is demanded has indeed been previously authenticated against the communication network.

In operation, the network component 128 receives the request 114 from the agent 112. It requests confirmation from the trust server 110 that the node 116 is indeed served by agent 112. If this is the case, the request 114 is further processed to the server 108 which then sends the requested information 126 to the agent 112. If this is not the case, the request 114 is not further processed to the server 108 and as a consequence the information 126 is not given to the agent 112.

If the request 114 comprises furthermore the authentication identifier 120, then the network component 128 requests the trust server 110 if the authenticator 118 to which the authentication identifier 120 relates is indeed the serving authenticator for the node 116. If this is true then the request 114 is further processed to the server 126 which then provides the agent 112 with the requested information 126. Otherwise the request 114 is not any more forwarded to the server 108 and as a consequence the information 126 is not given to the agent 112.

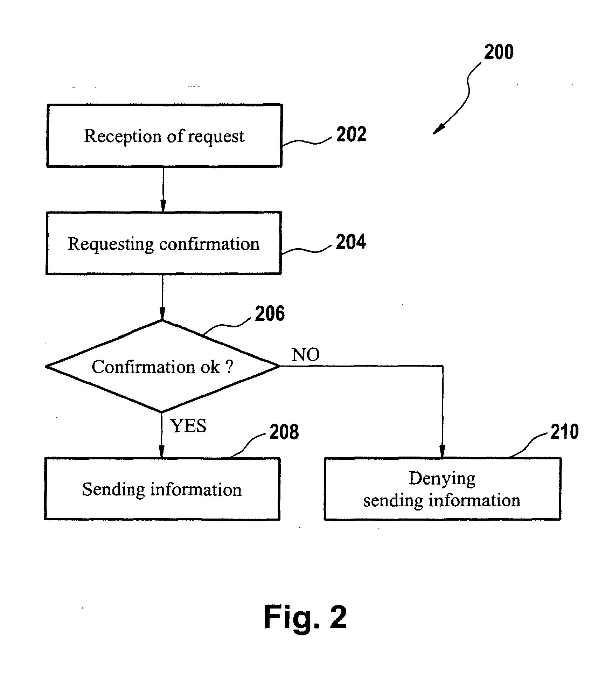

Fig. 2 shows a flow diagram 200 illustrating the basic steps performed by the method in accordance with the invention. In step 202, a request from an agent network is received at the core network, wherein the request relates to a node which is served by the agent, and wherein the request requests information about the node from a server of the core network. In step 204 confirmation is requested from a trust server of the core network if the node has been previously authenticated by the trust server against the communication network. In step 206 the initial authentication of the node is either negated or approved by the trust server. If the node has been previously authenticated, then the requested information is sent from the server to the agent as indicated in step 208. Otherwise the requested information is not sent to the agent as indicated in step 210.

**List of Reference Numerals**

| | |
|---|---|
| 100 | Block diagram |
| 102 | Communication network |
| 104 | Core network |
| 106 | Access network |
| 108 | Server |
| 110 | Trust server |
| 112 | Agent |
| 114 | Request |
| 116 | Node |
| 118 | Authenticator |
| 120 | Authenticator identifier |
| 122 | Communication link |
| 124 | Communication link |
| 126 | Information |
| 128 | Network component |
| 200 | Flow diagram |
| 202 | Step of reception of request |
| 204 | Step of requesting confirmation |
| 206 | Step of negating or approving confirmation |
| 208 | Step of sending information |
| 210 | Step of denying sending the information |

## Claims

1. A method of securing communication between an access network (106) and a core network (104), said access network (106) and said core network (104) being comprised in a communication network (102), said access network (106) comprising an agent (112), said core network (104) comprising a server (108) and a trust server (110), said method comprising:
- receiving a request (114) from said agent (112) at said core network (104), said request (114) relating to a node (116), said node (116) being served by said agent (112), said request (114) requesting information (126) about said node (116) from said server (108);
- requesting confirmation from said trust server (110) if said node (116) has been previously authenticated against said communication network (102):
- sending said information (126) requested by said agent (112) from said server (108) to said agent (112) if said node (116) has been previously authenticated against said communication network (102);
- denying sending said information (126) if said node (116) has not been previously authenticated against said communication network (102);
the method being **characterized in that** the request (114) received from said agent (112) comprises an authenticator identifier (120), wherein the authenticator identifier (120) relates to an authenticator (118) of said access network (106), wherein confirmation is requested from said trust server (110) if said authenticator (118) has been employed for a previous authentication of said node (116).

2. The method of claim 1, said method further comprising:
- comparing said authenticator identifier with a second authenticator identifier stored in said trust server, said second authenticator identifier relating to the authenticator that has authenticated said node previously;
- sending said information requested by said agent from said server to said agent if said authenticator identifier equals the second authenticator identifier;
- denying sending said information if said authenticator identifier does not equal the second authenticator identifier.

3. A communication network (100) comprising a core network (104) and an access network (106), said core network (104) being coupled to the access network (106), said core network comprising a server (108) and a trust server (110), said access network (106) comprising an agent (112), said core network (104) further comprising:
- means for receiving a request (114) from said agent (112), said request (114) relating to a node (116), said node being served by said agent (112), said request (114) requesting information (126) about said node (116) from said server (108);
- means for requesting confirmation from said trust server (110) if said node (110) has been previously authenticated;
- means for sending said information (120) requested by said agent (112) from said server (108) to said agent (112) if said node (116) has been previously authenticated;
- means for denying sending said information (126) if said node has not been previously authenticated;
the communication network being **characterized in that** the request (114) received from said agent (112) comprises an authenticator identifier (120), wherein the authenticator identifier (120) relates to an authenticator (118) of said access network (106) and **in that** the means for requesting confirmation from said trust server (110) are further adapted to send said authenticator identifier (120) to said trust server (110) to confirm if said authenticator (118) has been employed for a previous authentication of said node (116).

4. A communication network component (128) for a core network (104) of a communication network (102), said core network (104) further comprising a server (108) and a trust server (110), said communication network (102) further comprising an access network (106), said access network (106) comprising an agent (112), and said communication network component (128) comprising:
- means for receiving a request (114) from said agent (112), said request (114) relating to a node (116), said node (116) being served by said agent (112), said request (114) requesting information about said node (116) from said server (108);
- means for requesting confirmation from said trust server (110) that said node (116) has been previously authenticated against said communication network (102);
- means for sending said information (126) requested by said agent (112) from said server (108) to said agent (112) if said node (116) has been previously authenticated against said communication network (102);
- means for denying sending said information (126) if said node (116) has not been previously authenticated against said communication network (102);
the communication network component being **characterized in that** the request (114) received from said agent (112) comprises an authenticator identifier (120), wherein the authenticator identifier (120) relates to an authenticator (118) of said access network (106) and **in that** the means for requesting confirmation from said trust server (110) are further adapted to send said authenticator identifier (120) to said trust server (110) to confirm if said authenticator (118) has been employed for a previous authentication of said node (116).

## Patentansprüche

1. Ein Verfahren zum Sichern der Kommunikation zwischen einem Zugangsnetz (106) und einem Vermittlungsnetz (104), wobei das besagte Zugangsnetz (106) und das besagte Vermittlungsnetz (104) Teil eines Kommunikationsnetzwerks (102) sind, wobei das besagte Zugangsnetz (106) einen Agenten (112) umfasst, wobei das besagte Vermittlungsnetz (104) einen Server (108) und einen Trust-Server (110) umfasst, wobei das Verfahren umfasst:
- Empfangen einer Anforderung (114) von dem besagten Agenten (112) an dem besagten Vermittlungsnetz (104), wobei sich die besagte Anforderung (114) auf einen Knoten (116) bezieht, wobei der besagte Knoten (116) von dem besagten Agenten (112) bedient wird, wobei die besagte Anforderung (114) Informationen (126) über den besagten Knoten (116) von dem besagten Server (108) anfordert;
- Anfordern einer Bestätigung von dem besagten Trust-Server (110), ob der besagte Knoten (116) vorher gemäß dem besagten Kommunikationsnetzwerk (102) authentifiziert wurde;
- Senden der besagten von dem besagten Agenten (112) angeforderten Informationen (126) von dem besagten Server (108) an den besagten Agenten (112), wenn der besagte Knoten (116) vorher gemäß dem besagten Kommunikationsnetzwerk (102) authentifiziert wurde;
- Verweigern des Sendens der besagten Informationen (126), wenn der besagte Knoten (116) nicht vorher gemäß dem besagten Kommunikationsnetzwerk (102) authentifiziert wurde (102);
wobei das Verfahren **dadurch gekennzeichnet ist, dass** die von dem besagten Agenten (112) empfangene Anforderung (114) eine Authentifikationskennung (120) umfasst, wobei sich die Authentifikationskennung (120) auf einen Authentifikator (118) des besagten Zugangsnetzes (106) bezieht, wobei die Bestätigung von dem besagten Trust-Server (110) angefordert wird, wenn der besagte Authentifikator (118) für eine vorherige Authentifikation des besagten Knotens (116) verwendet wurde.

2. Das Verfahren nach Anspruch 1, wobei das besagte Verfahren umfasst:
- Vergleichen der besagten Authentifikationskennung mit einer in dem besagten Trust-Server gespeicherten zweiten Authentifikationskennung, wobei sich die besagte zweite Authentifikationskennung auf den Authentifikator, welcher vorher den besagten Knoten authentifiziert hat, bezieht;
- Senden der besagten von dem besagten Agenten angeforderten Informationen von dem besagten Server an den besagten Agenten, wenn die besagte Authentifikationskennung der zweiten Authentifikationskennung entspricht;
- Verweigern des Sendens der besagten Informationen, wenn die besagte Authentifikationskennung nicht der zweiten Authentifikationskennung entspricht.

3. Ein Kommunikationsnetzwerk (100) mit einem Vermittlungsnetz (104) und einem Zugangsnetz (106), wobei das besagte Vermittlungsnetz (104) an das Zugangsnetz (106) gekoppelt ist, wobei das besagte Vermittlungsnetz einen Server (108) und einen Trust-Server (110) umfasst, wobei das besagte Zugangsnetz (106) einen Agenten (112) umfasst, wobei das besagte Vermittlungsnetz (104) weiterhin umfasst:
- Mittel zum Empfangen einer Anforderung (114) von dem besagten Agenten (112),
wobei sich die besagte Anforderung (114) auf einen Knoten (116) bezieht, wobei der besagte Knoten (116) von dem besagten Agenten (112) bedient wird, wobei die besagte Anforderung (114) Informationen (126) über den besagten Knoten (116) von dem besagten Server (108) anfordert;
- Mittel zum Anfordern einer Bestätigung von dem besagten Trust-Server (110), ob der besagte Knoten (116) vorher authentifiziert wurde;
- Mittel zum Senden der besagten von dem besagten Agenten (112) angeforderten Informationen (126) von dem besagten Server (108) an den besagten Agenten (112) wenn der besagte Knoten (116) vorher authentifiziert wurde;
- Mittel zum Verweigern des Sendens der besagten Informationen (126), wenn der besagte Knoten nicht vorher authentifiziert wurde;
wobei das Kommunikationsnetzwerk **dadurch gekennzeichnet ist, dass** die von dem besagten Agenten (112) empfangene Anforderung (114) eine Authentifikationskennung (120) umfasst, wobei sich die Authentifikationskennung (120) auf einen Authentifikator (118) des besagten Zugangsnetzes (106) bezieht, und dass die Mittel zum Anfordern der Bestätigung von dem besagten Trust-Server (110) weiterhin dazu ausgelegt sind, die besagte Authentifikationskennung (120) an den besagten Trust-Server (110) zu senden, um zu bestätigen, dass der besagte Authentifikator (118) für eine vorherige Authentifizierung des besagten Knotens (116) verwendet wurde.

4. Eine Kommunikationsnetzwerk-Komponente (128) für ein Vermittlungsnetz (104) eines Kommunikationsnetzwerks (102), wobei das besagte Vermittlungsnetz (104) weiterhin einen Server (108) und einen Trust-Server (110) umfasst, wobei das besagte Kommunikationsnetzwerk (102) weiterhin ein Zugangsnetz (106) umfasst, wobei das besagte Zugangsnetz (106) einen Agenten (112) umfasst, und wobei die besagte Kommunikationsnetzwerk-Komponente (128) umfasst:
- Mittel zum Empfangen einer Anforderung (114) von dem besagten Agenten (112),
wobei sich die besagte Anforderung (114) auf einen Knoten (116) bezieht, wobei der besagte Knoten (116) von dem besagten Agenten (112) bedient wird, wobei die besagte Anforderung (114) Informationen über den besagten Knoten (116) von dem besagten Server (108) anfordert;
- Mittel zum Anfordern einer Bestätigung von dem besagten Trust-Server (110), dass der besagte Knoten (116) vorher gemäß dem besagten Kommunikationsnetzwerk (102) authentifiziert wurde;
- Mittel zum Senden der besagten von dem besagten Agenten (112) angeforderten Informationen (126) von dem besagten Server (108) an den besagten Agenten (112), wenn der besagte Knoten (116) vorher gemäß dem besagten Kommunikationsnetzwerk (102) authentifiziert wurde;
- Mittel zum Verweigern des Sendens der besagten Informationen (126), wenn der besagte Knoten (116) nicht vorher gemäß dem besagten Kommunikationsnetzwerk (102) authentifiziert wurde;
wobei die Kommunikationsnetzwerk-Komponente **dadurch gekennzeichnet ist, dass** die von dem besagten Agenten (112) empfangene Anforderung (114) eine Authentifikationskennung (120) umfasst, wobei sich die Authentifikationskennung (120) auf einen Authentifikator (118) des besagten Zugangsnetzes (106) bezieht, und dass die Mittel zum Anfordern der Bestätigung von dem besagten Trust-Server (110) weiterhin dazu ausgelegt sind, die besagte Authentifikationskennung (120) an den besagten Trust-Server (110) zu senden, um zu bestätigen, dass der besagte Authentifikator (118) für eine vorherige Authentifizierung des besagten Knotens (116) verwendet wurde.

## Revendications

1. Procédé de sécurisation des communications entre un réseau d'accès (106) et un coeur de réseau (104), ledit réseau d'accès (106) et ledit coeur de réseau (104) étant situés dans un réseau de communication (102), ledit réseau d'accès (106) comprenant un agent (112), ledit coeur de réseau (104) comprenant un serveur (108) et un serveur de confiance (110), ledit procédé comprenant :
- recevoir une demande (114) provenant dudit agent (112) dans ledit coeur de réseau (104), ladite demande (114) étant associée à un noeud (116), ledit noeud (116) étant desservi par ledit agent (112), ladite demande (114) demandant des informations (126) concernant ledit noeud (116) audit serveur (108) ;
- demander une confirmation audit serveur de confiance (110) si ledit noeud (116) a été précédemment authentifié par rapport audit réseau de communication (102).
- envoyer audit agent (112) lesdites informations (126) demandées par ledit agent (112) audit serveur (108) si ledit noeud (116) a été précédemment authentifié par rapport audit réseau de communication (102) ;
- refuser l'envoi desdites informations (126) si ledit noeud (116) n'a pas été précédemment authentifié par rapport audit réseau de communication (102) ;
le procédé étant **caractérisé en ce que** la demande (114) provenant dudit agent (112) comprend un identifiant d'authentification (120), dans lequel l'identifiant d'authentification (120) se rapporte à un authentifiant (118) dudit réseau d'accès (106), dans lequel la confirmation est demandée audit serveur de confiance (110) si ledit authentifiant (118) a été utilisé pour une authentification précédente dudit noeud (116).

2. Procédé selon la revendication 1, ledit procédé comprenant en outre :
- comparer ledit identifiant d'authentification à un deuxième identifiant d'authentification stocké dans ledit serveur de confiance, ledit deuxième identifiant d'authentification étant associé à l'authentifiant qui a authentifié ledit noeud précédemment ;
- envoyer audit agent lesdites informations demandées par ledit agent audit serveur si ledit identifiant d'authentification est égal au deuxième identifiant d'authentification ;
- refuser l'envoi desdites informations si ledit identifiant d'authentification n'est pas égal au deuxième identifiant d'authentification.

3. Réseau de communication (100) comprenant un coeur de réseau (104) et un réseau d'accès (106), ledit coeur de réseau (104) étant relié au réseau d'accès (106), ledit coeur de réseau comprenant un serveur (108) et un serveur de confiance (110), ledit réseau d'accès (106) comprenant un agent (112), ledit coeur de réseau (104) comprenant en outre :
- des moyens pour recevoir une demande (114) provenant dudit agent (112), ladite demande (114) étant associée à un noeud (116), ledit noeud étant desservi par ledit agent (112), ladite demande (114) demandant des informations (126) concernant ledit noeud (116) audit serveur(108);
- des moyens pour demander une confirmation audit serveur de confiance (110) si ledit noeud (116) a été précédemment authentifié ;
- des moyens pour envoyer audit agent (112) lesdites informations (126) demandées par ledit agent (112) audit serveur (108) si ledit noeud (116) a été précèdemment authentifié ;
- des moyens pour refuser l'envoi desdites informations (126) si ledit noeud n'a pas été précédemment authentifié ;
le réseau de communication étant **caractérisé en ce que** la demande (114) provenant dudit agent (112) comprend un identifiant d'authentification (120), dans lequel l'identifiant d'authentification (120) se rapporte à un authentifiant (118) dudit réseau d'accès (106) et **en ce que** les moyens pour demander une confirmation audit serveur de confiance (110) sont en outre adaptés pour envoyer ledit identifiant d'authentification (120) audit serveur de confiance (110) pour confirmer si ledit authentifiant (118) a été utilisé pour une authentification précédente dudit noeud (116).

4. Composant (128) de réseau de communication pour un coeur de réseau (104) d'un réseau de communication (102), ledit coeur de réseau (104) comprenant en outre un serveur (108) et un serveur de confiance (110), ledit réseau de communication (102) comprenant en outre un réseau d'accès (106), ledit réseau d'accès (106) comprenant un agent (112), et ledit composant (128) de réseau de communication comprenant :
- des moyens pour recevoir une demande (114) provenant dudit agent (112), ladite demande (114) étant associée à un noeud (116), ledit noeud (116) étant desservi par ledit agent (112), ladite demande (114) demandant des informations concernant ledit noeud (116) audit serveur (108) ;
- des moyens pour demander une confirmation audit serveur de confiance (110) selon laquelle ledit noeud (116) a été précédemment authentifié par rapport audit réseau de communication (102) ;
- des moyens pour envoyer audit agent (112) lesdites informations (126) demandées par ledit agent (112) audit serveur (108) si ledit noeud (116) a été précédemment authentifié par rapport audit réseau de communication (102) ;
- des moyens pour refuser l'envoi desdites informations (126) si ledit noeud (116) n'a pas été précédemment authentifié par rapport audit réseau de communication (102) ;
le composant de réseau de communication étant **caractérisé en ce que** la demande (114) provenant dudit agent (112) comprend un identifiant d'authentification (120), dans lequel l'identifiant d'authentification (120) se rapporte à un authentifiant (118) dudit réseau d'accès (106) et **en ce que** les moyens pour demander une confirmation audit serveur de confiance (110) sont en outre adaptés pour envoyer ledit identifiant d'authentification (120) audit serveur de confiance (110) pour confirmer si ledit authentifiant (118) a été utilisé pour une authentification précédente dudit noeud (116).
